# EUROPEAN PATENT SPECIFICATION

(11) **EP 0 332 911 B1**
(45) Date of publication and mention of the grant of the patent: **08.02.1995**
(21) Application number: 89103358.1
(22) Date of filing: 25.02.1989
(51) Int. Cl.: G06F 12/02

(54) **Local memory fast selecting apparatus**
Vorrichtung zum schnellen Auswählen eines lokalen Speichers
Appareil pour sélectionner rapidement une mémoire locale

(30) Priority: 15.03.1988 IT 1977088
(43) Date of publication of application: 20.09.1989
(73) Proprietor: BULL HN INFORMATION SYSTEMS ITALIA S.p.A., 10014 Caluso (Torino) (IT)
(72) Inventor: Maccianti, Tiziano, I-20010 Pregnana Milanese (Mi) (IT); Oldani, Angelo, I-20010 Ossona (Mi) (IT)
(74) Representative: Falcetti, Carlo

(56) References cited:
- EP-A- 0 200 440
- US-A- 4 050 094
- ELECTRONIC ENGINEERING, vol. 58, no. 714, June 1986, pages 39-42,44,46,48,London, GB; C. GAY: "M68000 family memory management - part 1"

## Description

The present invention relates to a local memory fast selecting apparatus in data processing systems which make use of the virtual memory concept.

It is know that in data processing systems, using the virtual memory concept, a logical or virtual address generated by a central processing unit is converted or translated by a memory management unit or MMU, in a physical address.

Depending on the logical address received as input, the MMU produces as output, in addition to the physical address, also a binary code (destination code) which defines a destination space, for instance, in a multiprocessor system, a memory space internal to the processor which has generated the (logical) address or a memory space of one among other processors.

In addition, a field (logical space code) of the logical address, which is not used for the generation of the physical address, defines, within the destination space, a logical space and indicates if the address is related to a working memory or local memory space, to a register space or other resources space.

The destination code in output from MMU and the logical space code are decoded by a decoder to generate one among a plurality of selection signals each of which references and selects the appropriate resource for execution of the requested operation.

This decoding operation requires some time.

In order to reduce this time, US-A-4.050.094 discloses a translator lookahead control where a MMU translator is loaded with physical addresses corresponding to logical addresses and at the same time with a code related to the physical addresses, representative of a memory resource to be selected among a plurality of memory resource.

The code is obtained from decoding the related physical address, thus ascertaining which of the memory resource is to be selected and is stored in coded form in the MMU translator.

Thereafter when the MMU is referenced, it outputs, in addition to a physical address, a selection code which may be decoded by high speed circuits thus minimizing the delay.

This solution provide some advantage over full post decoding but is not completely satisfactory.

With the availability on the market of integrated circuit components and particularly microprocessors, which by manufacturing process improvement evolve in time and improve their performances in term of operating speed, still assuring the full logical compatibility with earlier components of the same kind, the problem arises of fully exploiting the higher performances offered by the new components.

This has to be obtained without changing the operating system, the logical structure of the addresses, to assure compatibility of the most recent products with the previous ones, and possibly without any hardware change or with minor changes to the hardware.

A substantive limitation in exploiting the higher speed of the microprocessors is imposed by the mechanism through which they communicate with working memories.

Even if the technology evolution makes available faster memory components, this progress does not pace with the new requirements imposed by microprocessors.

By the more this is true for conventional electronic components such as AND,OR gates.

The present invention has the purpose of speeding up the operation of working memory selection by zeroing the deconding time required to generate the memory selection signal.

This is obtained without changing the address structure and the operating system, with minor circuit changes and the addition of a single integrated circuit component or memory chip acting as auxiliary memory or parallelism expansion of a conventional MMU.

Basically the scope of the invention is achieved by pre-decoding, when the MMU is loaded, the destination code which is written in each addressable location of the MMU.

If, as a result of such decoding a memory selection signal is generated, this signal is stored as information bit into the auxiliary memory or MMU expansion.

When the MMU is interrogated for converting a logical address in a physical address, the MMU outputs the destination code and the MMU expansion outputs the corresponding memory selection signal which is immediately available, without need to decode the destination code.

The features and the advantages of the invention will appear more clearly from the following description of a preferred form of embodiment and from the enclosed drawings where:
- Figure 1 is a block diagram of a data processing system known in the art.
- Figure 2 is a block diagram of the system of figure 1, modified to incorporate the memory fast selecting apparatus of the invention.
- Figure 3 is a block diagram of a variant of the apparatus of figure 2.

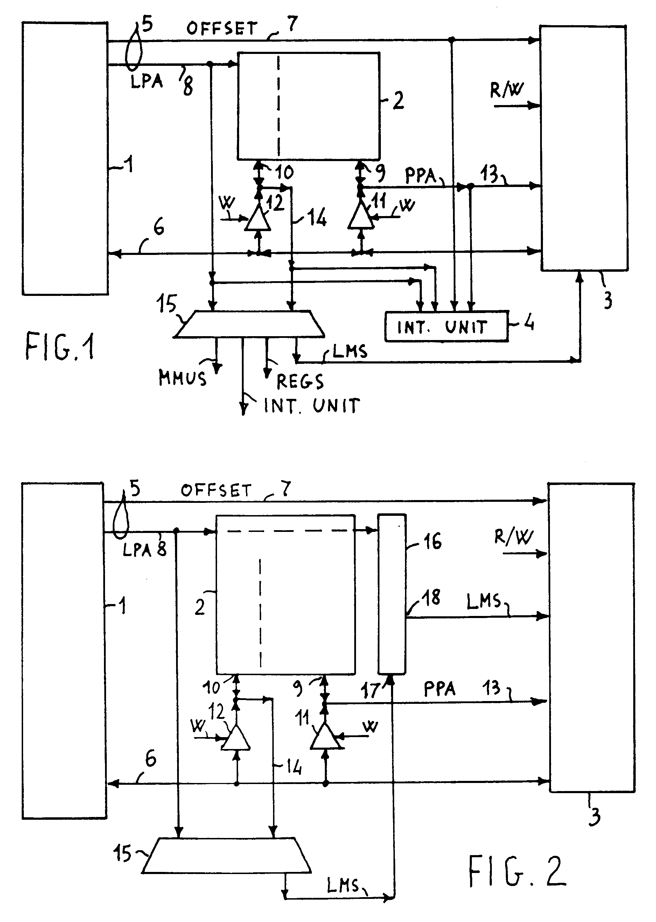

Figure 1 shows in block diagram, a data processing system known in the art, for highligthing the essential aspects usefull to a better understanding of the invention.

The system comprises a central processing unit 1, a memory management unit or MMU 2 and a working memory or local memory 3.

The central unit, for instance a microprocessor 68020 manufactured by the US firm Motorola, communicates with memory 3 and with MMU 2 through an address bus 5 and a data bus 6.

Address bus 5 comprises two sets of leads: a sub channell 7 and a subchannel 8 respectively for transferring an OFFSET code and a logical page code or address LPA.

The OFFSET code is directly forwarded from central unit 1 to memory 3.

The logical page code is forwarded as address for MMU2.

A MMU location corresponds to each MMU2 address.

A physical page address PPA and a destination code are stored in each location of the MMU and correspond to the related location address.

When the MMU 2 is interrogated at a predetermined address, this information (the related PPA and destination code) is read out from MMU2 and is available on two output sets 9,10 respectively.

This information is loaded in the MMU2 by the central unit 1, at system initalization, through tha data bus 6 and two tristate gate sets 11,12 enabled by a write command W from unit 1.

When the MMU2 is operative in read operation the physical page address PPA, present at output 9 is input, through bus 13 to memory 3.

The physical page address is further sent, together with the OFFSET code, to an interface unit 4, which communicates, through a system BUS, with other system units, not shown and having storage resources which form an "external memory space ".

The destination code, at output 10, indicates if the physical address generated by MMU2 is related to memory 3 or to external memory resources.

This code is input to a decoder 15, through a channel 14.

Decoder 14 further receives a logical space code through channel 8.

This information is decoded to generate, in mutually exclusive way, one among a plurality of signals MMUS (for write selection of MMU2), INT UNIT (for selection of the interface unit 4), REGS (for selection of register banks, not shown) and LMS for selection of the local memory 3.

Signal LMS is input to local memory 3 and enables it to a read or write operation in accordance with a control signal R/W generated by unit 1 and further received by memory 3.

The read/write operation is performed at the address defined by the OFFSET code and the physical page address PPA.

The delay caused by decoder 15 hampers the response time of memory 3 to access operations by unit 1 and if can be tolerated in case unit 1 operates at a clock rate of 16 MHz, it may become prejudicial if the same unit operates at a timing clock rate of 20 or 25 MHz as made possible by the technological evolution.

It is therefore required that memory 3 be able to read or write information in a faster way.

This may be achieved first of all by minimizing the memory selection delay.

Figure 2 shows the same system of figure 1 with circuit changes made in accordance with the present invention.

Some parts of the system of figure 1 are not shown because they are not essential for the understanding of the invention.

The system of Figure 2 differs from the system of figure 1 only because an auxiliary memory 16 has been added to MMU2.

The auxiliary memory 16 may for instance consist of a single integrated circuit having a capacity of 16Kx1 bit.

The capacity, expressed in number of addressable locations or entries is equal to the one of MMU2, of which auxiliary memory 16 substantially constitutes a parallelism expansion.

Auxiliary memory 16 is preferably, if not necessarily, of the type having independent input and output terminals and has an input 17 directly connected to the output of decoder 15, where the memory selection signal LMS is generated.

Output 18 is directly connected to the selection input of memory 3.

Auxiliary memory 16 is addressed and controlled exactly as integral part of MMU2.

Thus, when MMU2 is written at initialization stage or in the course of subsequent memory mapping operations, the destination code, which is recorded in MMU2 through gates 12, is also input to decoder 15,

There is decoded and the memory selection bit (LMS) asserted or de asserted, is written by the same operation in auxiliary memory 16.

In the course of subsequent access operations to local memory 3, the addressing of MMU2 and of the auxiliary memory 16 causes the generation of signal LMS without decoding delay, in that such signal is directly generated by auxiliary memory 16.

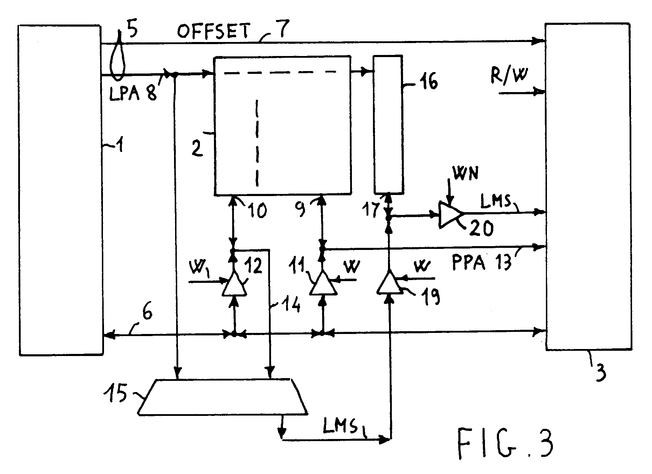

Figure 3 shows the circuit diagram of figure 2 with the circuit changes required in case an integrated circuit having common input,output terminal is used for auxiliary memory 16.

In this case the output of decoder 15, where the memory selection signal is output, is connected to input 17 of memory 16 through a tristate gate 19.

This gate is controlled by the same signal W which controls the writing of MMU2.

The input/output 17 is further connected to the selection input of the memory 3 through a logic gate 20.

Gate 20 may be of a tristate type or, depending on the relation between logically asserted signals and electrical levels, a simple AND gate or NOR gate, controlled by a signal WN (obtained by inversion of the MMU2 write command W) or by signal W itself.

In this case gate 20 introduces a propagation delay which is however lesser that the one which would have been caused by a decoder such as decoder 15.

It is clear that several changes can be made to the described apparatus.

For instance auxiliary memory 16 may have a parallelism of 2 or more bits so as to store a plurality of selection bits obtained from decoder 15 so as to output, when read out and without decoding delay a selection signal among a plurality of selection signals for selecting one among a plurality of memory resources.

## Claims

1. Local memory fast selection apparatus, in a data processing system having a plurality of memory resources, said local memory (3) being one of said resources, and addressing by logic/virtual addresses which are converted into physical addresses, comprising a memory management unit MMU (2) for converting a logical address into a physical address and for generating a destination code which identifies the memory resource to be selected in said plurality, a decoder (15) connected to outputs of said MMU for receiving said destination code and for outputing one among a plurality of memory resource selection signals, one of said signals being a local memory selection signal, characterised in that said apparatus comprises: an auxiliary memory (16) addressed by the same logical address used to address said MMU and having an input (17) connected to an output (LMS) of said decoder (15) for receiving said local memory selection signal and for storing a bit corresponding to said selection signal when said MMU and said auxiliary memory are jointly controlled for a write operation, said auxiliary memory (16) having an output (18) connected to said local memory (3) for outputing to said local memory (3), when controlled for a read operation jointly with said MMU (2), a selection signal corresponding to the stored bit, without any decoding delay.

2. Apparatus as claimed in Claim 1, wherein said auxiliary memory (16) has said input (17) distinct from said output (18), said output being directly connected to a selection input of said local memory (3).

3. Apparatus as claimed in claim 1 wherein said auxiliary memory (16) has said input (17) common to said output (1), said input being connected to an output of said decoder (15) through a gate (19) enabled by a write command for said MMU, said output being connected to a selection input of said local memory through a gate (20) disabled by a write command for said MMU.

## Patentansprüche

1. Schnellauswahlvorrichtung für einen Lokalspeicher in einem Datenverarbeitungssystem mit einer Mehrzahl von Speicherbetriebsmitteln, wobei der Lokalspeicher (3) eines der Betriebsmittel ist und durch logische/virtuelle Adressen addressiert wird, die in physikalische Adressen umgewandelt werden, die folgende Merkmale aufweist: eine Speicherverwaltungseinheit MMU (2) zum Umwandeln einer logischen Adresse in eine physikalische Adresse und zum Erzeugen eines Bestimmungscodes, der das Speicherbetriebsmittel, das aus der Mehrzahl ausgewählt werden soll, identifiziert, einen Decoder (15), der mit den Ausgängen der MMU verbunden ist, um den Bestimmungscode zu empfangen und um eines unter einer Mehrzahl von Speicherbetriebsmittel-Auswahlsignalen auszugeben, wobei eines der Signale ein Lokalspeicher-Auswahlsignal ist, dadurch gekennzeichnet, daß die Vorrichtung folgende Merkmale aufweist: einen Hilfsspeicher (16), der durch die gleiche logische Adresse adressiert ist, die verwendet wird, um die MMU zu adressieren, und der einen Eingang (17) aufweist, der mit einem Ausgang (LMS) des Decoders (15) verbunden ist, um das Lokalspeicher-Auswahlsignal zu empfangen und um ein Bit zu speichern, das dem Auswahlsignal entspricht, wenn die MMU und der Hilfsspeicher gemeinsam für eine Schreiboperation gesteuert sind, wobei der Hilfsspeicher (16) einen Ausgang (18) aufweist, der mit dem Lokalspeicher (3) verbunden ist, zum Ausgeben eines Auswahlsignals, das dem gespeicherten Bit entspricht, zu dem Lokalspeicher (3) ohne irgendeine Decodierverzögerung, wenn dieser für eine Leseoperation gemeinsam mit der MMU (2) gesteuert ist.

2. Vorrichtung gemäß Anspruch 1, bei der der Hilfsspeicher (16) einen von dem Ausgang (18) verschiedenen Eingang (17) aufweist, wobei der Ausgang direkt mit einem Auswahleingang des Lokalspeichers (3) verbunden ist.

3. Vorrichtung gemäß Anspruch 1, bei der der Eingang (17) des Hilfsspeichers (16) gleichzeitig der Ausgang (18) ist, wobei der Eingang durch ein Gatter (19), das durch einen Schreibbefehl für die MMU aktiviert wird, mit einem Ausgang des Decoders (15) verbunden ist, wobei der Ausgang durch ein Gatter (20), das durch einen Schreibbefehl für die MMU deaktiviert wird, mit einem Auswahleingang des Lokalspeichers verbunden ist.

## Revendications

1. Dispositif de sélection rapide de mémoire locale, dans un système informatique comportant un ensemble de ressources de mémoire, cette mémoire locale (3) étant l'une de ces ressources, et étant adressée par des adresses logiques/virtuelles qui sont converties en adresses physiques, comprenant une unité de gestion de mémoire ou UGM (2) pour convertir une adresse logique en une adresse physique et pour générer un code de destination qui identifie la ressource de mémoire à sélectionner parmi l'ensemble précité, un décodeur (15) connecté à des sorties de l'UGM pour recevoir le code de destination et pour émettre un signal parmi un ensemble de signaux de sélection de ressource de mémoire, l'un de ces signaux étant un signal de sélection de mémoire locale, caractérisé en ce que ce dispositif comprend : une mémoire auxiliaire (16) adressée par l'adresse logique qui est également utilisée pour adresser l'UGM, et ayant une entrée (17) connectée à une sortie (LMS) du décodeur (15), pour recevoir le signal de sélection de mémoire locale et pour enregistrer un bit correspondant à ce signal de sélection lorsque l'UGM et la mémoire auxiliaire sont commandées conjointement pour une opération d'écriture, la mémoire auxiliaire (16) ayant une sortie (18) qui est connectée à la mémoire locale (3) pour émettre vers la mémoire locale (3), lorsqu'elle est commandée pour une opération de lecture conjointement à l'UGM (2), un signal de sélection correspondant au bit enregistré, sans aucun retard de décodage.

2. Dispositif selon la revendication 1, dans lequel dans la mémoire auxiliaire (16) l'entrée (17) est distincte de la sortie (18), la sortie étant directement connectée à une entrée de sélection de la mémoire locale (3).

3. Dispositif selon la revendication 1, dans lequel dans la mémoire auxiliaire (16) l'entrée (17) et la sortie (18) sont établies de façon commune, l'entrée étant connectée à une sortie du décodeur (15) par l'intermédiaire d'une porte (19) qui est validée par un ordre d'écriture provenant de l'UGM, et la sortie étant connectée à une entrée de sélection de la mémoire locale par l'intermédiaire d'une porte (20) qui est invalidée par un ordre d'écriture provenant de l'UGM.
